# EUROPEAN PATENT SPECIFICATION

(11) **EP 2 509 760 B1**
(45) Date of publication and mention of the grant of the patent: **25.01.2017**
(21) Application number: 10797997.3
(22) Date of filing: 09.12.2010
(51) Int. Cl.: B29C 45/00, B29C 45/14

(54) **INJECTION MOULDING SOFT ELASTOMERS**
SPRITZGIESSEN VON WEICHEN ELASTOMEREN
MOULAGE PAR INJECTION D'ÉLASTOMÈRES SOUPLES

(30) Priority: 09.12.2009 IE 20090928; 18.12.2009 IE 20090951
(43) Date of publication of application: 17.10.2012
(73) Proprietor: Lancastria Limited, Dublin 12 (IE)
(72) Inventor: HACKETT, Padraic, Glasnevin Dublin 11 (IE)
(74) Representative: Schütte, Gearoid
(86) International application number: PCT/EP2010/007489
(87) International publication number: WO 2011/069659

(56) References cited:
- EP-A2- 2 080 780
- WO-A1-2007/129350
- WO-A1-2009/085646
- WO-A2-2008/134505
- FR-A1- 2 927 834
- GB-A- 2 151 971
- GB-A- 2 357 725
- JP-A- 9 057 758
- JP-A- 2004 174 935
- JP-A- 2005 313 385
- US-A- 4 075 266
- US-A1- 2003 037 377
- US-A1- 2004 224 786
- US-A1- 2006 151 505
- US-A1- 2007 031 595
- US-A1- 2009 256 281

## Description

### Introduction

This invention relates to the injection moulding of relatively soft elastomers and gels formed therefrom.

Throughout this patent specification by relatively soft is meant materials with a hardness of 30 Shore A or less. Such materials include gels formed from soft elastomers such as SEBS (Styrene-Ethylene-Butylene-Styrene) copolymers in combination with a plasticizing oil.

The invention is primarily concerned with the manufacture of gel cushion products of the type having a grid-like gel body forming a matrix of open-ended cells. Such gel cushion products are used in the manufacture of cushions, seats, mattresses and the like. An example of such a product is disclosed in EP 2 080 780. JP63091212A discloses a method for manufacturing a partially cloth laminated product by injection moulding. US 2004/224786 discloses a moulding process for manufacturing a decorative grip for a golf club. GB 2357725 discloses a cosmetic cover for a limb prosthesis which is moulded about a core within a mould. In US 2007/0031595 there is disclosed a method for moulding a soft cushioning material about an object such as a pen barrel. GB 2151971 discloses two stage injection moulding of brushes.

A problem arises with the injection moulding of gel cushion products in that after each moulding cycle the gel cushion product thus formed tends to firmly grip onto the mould cores which form the cells in the gel body during moulding. This presents a difficulty in ejecting the gel body from the mould to enable a new moulding cycle to commence. Engaging the gel body with ejector pins as the mould opens in a conventional manner does not help, because the gel body simply deforms where engaged by the ejector pins due to the softness of the material.

The present invention is directed towards overcoming this problem.

### Summary of the Invention

According to the invention there is provided a process for injection moulding a soft elastomeric product including the steps;
positioning a substrate between a complementary pair of mould parts forming a mould;
closing the mould;
injecting liquid elastomer into the mould for forming the soft elastomeric product bonded to the substrate; and
opening the mould whilst clamping the substrate to a first mould part for stripping the product from the mould as the mould is opening,
characterised in that the process includes engaging ejector pins mounted on a second mould part with the substrate by extending said ejector pins through openings in the product for clamping the substrate against the first mould part whilst opening the mould.

The problem of ejecting the product from the mould is overcome in accordance with this invention by moulding the product onto a substrate and holding the substrate as the mould opens to pull the gel product from the mould. The bonding of the gel product with the substrate needs to be sufficient so that the substrate does not tear away from the product as the product is pulled from the mould.

In one embodiment of the invention the process includes injecting the liquid elastomer through the substrate into the mould.

In another embodiment the process includes clamping the substrate to a first mould part whilst opening the mould.

In another embodiment the process includes clamping the substrate against a fixed mould part while moving an associated moveable mould part away from the fixed mould part whilst opening the mould.

Preferably the process includes engaging the substrate by means of a bulbus head on each ejector pin.

In another embodiment the substrate is a fabric material. The substrate may be a woven, knitted or a non-woven fabric material.

In a further embodiment the substrate is a non-woven polyester material.

In another embodiment the substrate comprises a web and the process includes;
leading the web between the mould parts when said mould parts are in an open position,
halting the web,
closing the mould parts with the web located between the mould parts and passing through a moulding cavity within the mould,
forming the product in the mould cavity bonded to the web,
   opening the mould, and
advancing the web for discharging the product from the mould on the web.

In another embodiment the substrate is perforated.

In another embodiment the process includes perforating the substrate prior to delivering the substrate to the mould.

In a further embodiment the process includes the step of perforating the substrate within the mould.

In another embodiment the elastomer has a hardness in the range 30 Shore A to 20 Shore 00.

In another embodiment the elastomer has a Shore A hardness of 7 or less.

In a further embodiment the elastomer is selected from the group; SEBS (styrene-ethylene-butylene-styrene), SEEPS (styrene-ethylene-ethylene-propylene-styrene), SEPS (styrene-ethylene-propylene-styrene), TPU (thermoplastic urethanes) and plasticized PVC.

In a preferred embodiment the product is a cushion.

In a particularly preferred embodiment the cushion has a grid-like structure.

In another aspect the invention provides a bedding product incorporating the cushion. In a preferred embodiment the bedding product is a mattress.

In a further aspect the invention provides a furniture product incorporating the cushion.

In another aspect the invention provides a process for injection moulding a plastics product including these steps;
positioning a substrate between a complementary pair of mould parts forming a mould;
closing the mould;
injecting liquid plastics material into the mould for forming the plastics product bonded to the substrate; and
opening the mould whilst holding the substrate for stripping the product from the mould as the mould is opening.

### Brief Description of the Drawings

The invention will be more clearly understood by the following description of some embodiments thereof, given by way of example only with reference to the accompanying drawings, in which:
Fig. 1 is a perspective view of a gel cushion product produced by the method of the invention;
Fig. 2 is a plan view of the gel cushion product;
Fig. 3 is an elevational view of the gel cushion product;
Fig. 4 is a side elevational view of the gel cushion product;
Fig. 5 is a schematic illustration of an injection moulding station for forming the gel cushion product;
Fig. 6 is a view similar to Fig. 5 showing the mould for forming the product in another position of use during ejection of the product from the mould; and
Fig. 7 is an enlarged detail perspective view showing engagement of the gel cushion product by ejector pins of the mould during ejection of the gel cushion product from the mould; and
Figs. 8 to 11 are views of other gel cushion products.

### Detailed Description of the Invention

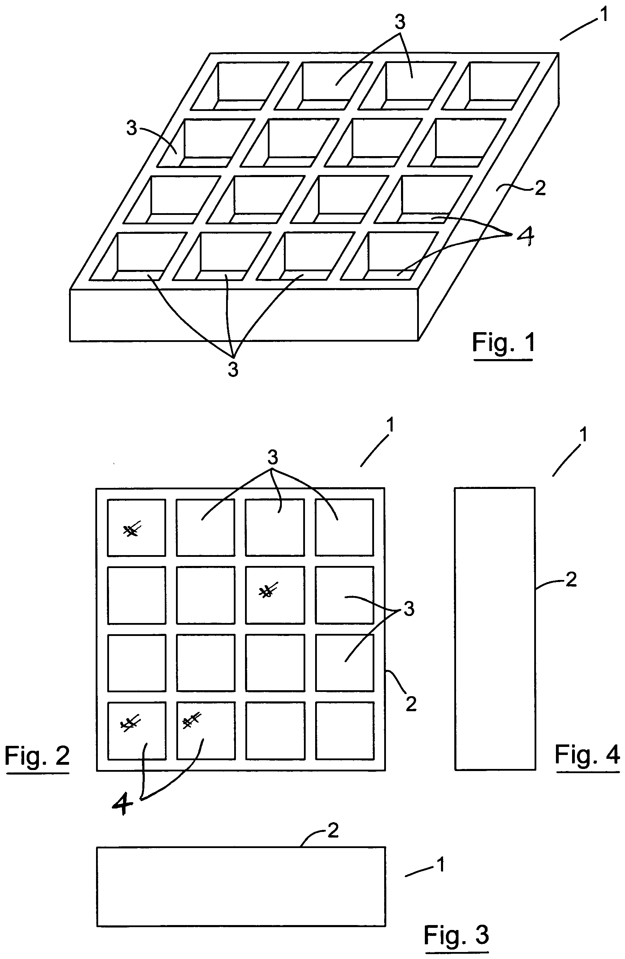

Referring initially to Figs. 1 to 4, a gel cushion product which is produced by the method of the invention is shown and indicated generally by the reference numeral 1. The product 1 has a grid-like gel body 2 forming a matrix of open-ended cells 3 with a fabric panel 4 laminated to one side of the body 2.

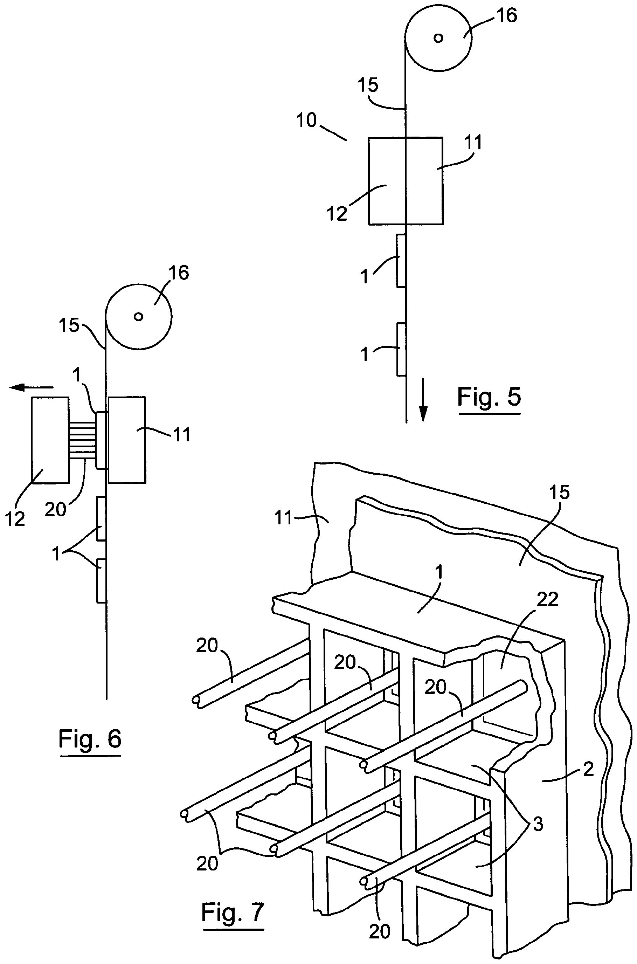

Referring now to Figs. 5 to 7, there is shown a mould 10. The mould 10 has a fixed mould part 11 and a complementary movable mould part 12 which is movable away from the fixed mould part 11 as shown in Fig. 6 for ejection of the moulded product 1 from the mould 10. A fabric web 15, which may conveniently be a fibrous polyester material, is led from a supply reel 16 and delivered between the mould parts 11, 12. The mould 10 is closed by engaging the movable mould part 12 against the fixed mould part 11 with the fabric web 15 therebetween and passing through a moulding cavity of the mould 10.

Liquid elastomer, such as SEBS for example, is then injected through the fabric web15 into the moulding cavity, forming the gel cushion product 1 about an array of cell-forming cores mounted on the movable mould part 12 within the moulding cavity and mechanically or chemically binding the cushion product 1 to the fabric web 15.

After cooling and solidifying the gel material within the mould 10, the movable mould part 12 is moved away from the fixed mould part 11 into the open position as shown in Fig. 6. As the mould 10 opens, ejector pins 20 at an outer end of each core in the mould 10 remain in engagement with the web 15 clamping the web 15 against the fixed mould part 11, as shown in Fig. 7. Thus, the cores are pulled away from the gel cushion product 1 as the mould 10 opens, leaving the gel cushion product 1 clamped against the fixed mould part 11 by the ejector pins 20 which extend through the cells 3 to engage the web 15 bonded to the body 2 at inner ends of the cells 3. It will be noted that each ejector pin 20 has an enlarged mushroom head 22. This provides good support for the fabric web 15 and promotes an even pulling of the product from the mould 10. When the core pins have been disengaged from the product 1 the ejector pins 20 are retracted and the web 15 is advanced to remove the gel cushion product 1 from the mould 10.

Downstream of the mould 10 the moulded gel cushion products 1 are cut away from the web 15 in any suitable manner leaving web fabric 4 laminated to one side of the gel body 2. If desired the body 2 could be fully cut away from the web 15.

It will be appreciated that a range of suitable elastomers can be used. These include SEBS, SEEPS, SEPS, TPU, plasticized PVC and other elastomers. Thermoplastic or thermosetting elastomers can be used. Silicone rubbers can also be used in other than bedding related applications.

The relatively soft elastomers used will typically be in the range 30 Shore A down to 20 Shore 00.

Regarding the fabric web 15 knitted, woven and non-woven fabrics can be used. Successful mechanical bonds can be achieved between the elastomer and a natural fabric such as cotton and with artificial fabrics. If required, to improve the mechanical bond the fabric web 15 may be perforated either prior to or during the moulding. Ribs or other protrusions or voids may be formed in the fabric web 15 to enhance the bonding with the polymer. The bond can also be chemical if a suitable combination of polymer and fabric web 15 is used - the combination of a polyolefin based fabric with a SEBS polymer is a typical example of this.

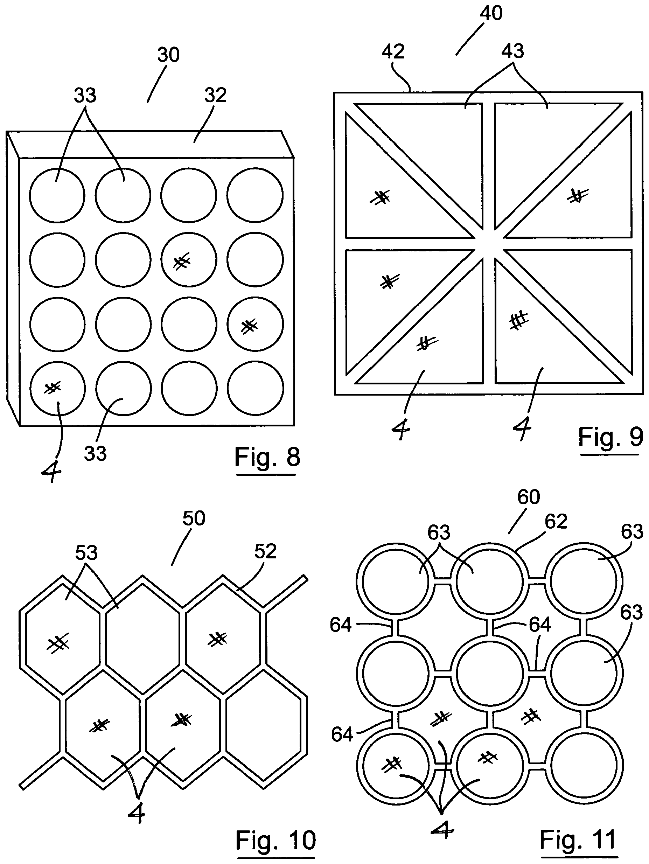

Referring now to Figs. 8 to 11, these show examples of various other gel cushion configurations. Parts similar to those described previously are assigned the same reference numerals. Fig. 8 shows a gel cushion product 30 having a gel body 32 with cylindrical open-ended cells 33. Fig. 9 shows a gel cushion product 40 having a gel body 42 with triangular open-ended cells 43. Fig. 10 shows a gel cushion product 50 having a gel body 52 with hexagonal open-ended cells 53. Fig. 11 shows a gel cushion product 60 having a gel body 62 with cylindrical open-ended cells 63 interconnected by webs or flanges 64. Any suitable openings may be provided in the product. These openings may form a regular repeating pattern or not as required. The gel cushion may be any desired shape.

Advantageously as the process of the invention can be fully automated it is significantly cheaper than the traditional ways of manufacturing such gel products such as pouring the liquid polymer into heated aluminium moulds. Further, the ejection method allows the design of thinner walled components with minimum draft angles. This will save material as the same mechanical properties in the end product can be achieved with less polymer material, which is expensive. Conveniently the process of the invention does not require any post lamination of fabric on one side of the product.

The invention is not limited to the embodiments hereinbefore described which may be varied in both construction and detail within the scope of the appended claims.

## Claims

1. A process for injection moulding a soft elastomeric product (1) including the steps;
positioning a substrate (15) between a complementary pair of mould parts (11,12) forming a mould(10);
closing the mould (10);
injecting liquid elastomer into the mould (10) for forming the soft elastomeric product bonded to the substrate (15); and
opening the mould (10) whilst clamping the substrate (15) to a first mould part (11) for stripping the product (1) from the mould (10) as the mould (10) is opening,
**characterised in that** the process includes engaging ejector pins (20) mounted on a second mould part (12) with the substrate (15) by extending said ejector pins (20) through openings (3) in the product (1) for clamping the substrate (15) against the first mould part (11) whilst opening the mould (10).

2. The process as claimed in claim 1 wherein the process includes injecting the liquid elastomer through the substrate (15) into the mould (10).

3. The process as claimed in claim 1 or claim 2 wherein the process includes engaging the substrate (15) by means of a bulbus head (22) on each ejector pin (20).

4. The process as claimed in any preceding claim wherein the substrate (15) is a fabric material.

5. The process as claimed in claim 4 wherein the substrate (15) is a non-woven fabric material.

6. The process as claimed in claim 5 wherein the substrate (15) is a non-woven polyester material.

7. The process as claimed in any preceding claim wherein the substrate comprises a web (15) and the process includes;
leading the web (15) between the mould parts (11, 12) when said mould parts (11, 12) are in an open position,
halting the web (15),
closing the mould parts (11, 12) with the web (15) located between the mould parts (11,12) and passing through a moulding cavity within the mould (10),
forming the product (1) in the mould cavity bonded to the web (15), opening the mould (10), and
advancing the web (15) for discharging the product (1) from the mould (10) on the web (15).

8. The process as claimed in any preceding claim wherein the substrate is perforated.

9. The process as claimed in any preceding claim wherein the elastomer has a hardness in the range 30 Shore A to 20 Shore 00.

10. The process as claimed in any preceding claim wherein the elastomer is selected from the group; SEBS (styrene-ethylene-butylene-styrene), SEEPS (styrene-ethylene-ethylene-propylene-styrene), SEPS (styrene-ethylene-propylene-styrene), TPU (thermoplastic urethanes) and plasticized PVC.

11. The process as claimed in any preceding claim wherein the product is a cushion.

## Patentansprüche

1. Verfahren zum Spritzgießen eines Weichelastomerprodukts (1), umfassend folgende Schritte:
Positionieren eines Substrats (15) zwischen einem komplementären Paar von Formabschnitten (11, 12), die eine Form (10) bilden;
Schließen der Form (10);
Einspritzen von flüssigem Elastomer in die zum Bilden des Weichelastomerprodukts vorgesehene Form (10), das an dem Substrat (15) haftet; und
Öffnen der Form (10) und dabei Klemmen des Substrats (15) an einen ersten Formabschnitt (11), um das Produkt (1) von der Form (10) abzuziehen, wenn sich die Form (10) öffnet,
**dadurch gekennzeichnet, dass** das Verfahren das Ineingriffbringen von an einem zweiten Formabschnitt (12) angebrachten Auswerfstiften (20) mit dem Substrat (15) durch Ausfahren der Auswerfstifte (20) durch Öffnungen (3) in dem Produkt (1), umfasst, um das Substrat (15) an den ersten Formabschnitt (11) zu klemmen, während die Form (10) geöffnet wird.

2. Verfahren nach Anspruch 1, wobei das Verfahren das Einspritzen des flüssigen Elastomers durch das Substrat (15) in die Form (10) umfasst.

3. Verfahren nach Anspruch 1 oder Anspruch 2, wobei das Verfahren das Greifen des Substrats (15) mittels eines kugelähnlichen Kopfs (22) an jedem Auswerfstift (20) umfasst.

4. Verfahren nach einem der vorangehenden Ansprüche, wobei es sich bei dem Substrat (15) um ein Textilmaterial handelt.

5. Verfahren nach Anspruch 4, wobei es sich bei dem Substrat (15) um ein Vliesmaterial handelt.

6. Verfahren nach Anspruch 5, wobei es sich bei dem Substrat (15) um ein Polyestervliesmaterial handelt.

7. Verfahren nach einem der vorangehenden Ansprüche, wobei das Substrat eine Bahn (15) umfasst und das Verfahren Folgendes umfasst:
Führen der Bahn (15) zwischen die Formabschnitte (11, 12), wenn sich die Formabschnitte (11, 12) in einer offenen Stellung befinden,
Anhalten der Bahn (15),
Schließen der Formabschnitte (11, 12), wobei sich die Bahn (15) zwischen den Formabschnitten (11, 12) befindet und durch eine Formhöhlung in der Form (10) verläuft,
Bilden des Produkts (1) in der Formhöhlung, das an der Bahn (15) haftet,
Öffnen der Form (10), und
Voranbewegen der Bahn (15), um das Produkt (1) auf der Bahn (15) aus der Form (10) auszustoßen.

8. Verfahren nach einem der vorangehenden Ansprüche, wobei das Substrat gelocht ist.

9. Verfahren nach einem der vorangehenden Ansprüche, wobei das Elastomer eine Härte im Bereich von 30 Shore A bis 20 Shore 00 aufweist.

10. Verfahren nach einem der vorangehenden Ansprüche, wobei das Elastomer aus folgender Gruppe ausgewählt wird: SEBS (Styrol-Ethylen-Butylen-Styrol), SEEPS (Styrol-Ethylen-Ethylen-Propylen-Styrol), SEPS (Styrol-Ethylen-Propylen-Styrol), TPU (thermoplastische Urethane) und Weich-PVC.

11. Verfahren nach einem der vorangehenden Ansprüche, wobei es sich bei dem Produkt um ein Polster handelt.

## Revendications

1. Processus de moulage par injection d'un produit élastomère mou (1) comportant les étapes de :
positionnement d'un substrat (15) entre une paire complémentaire de pièces de moule (11, 12) formant un moule (10) ;
fermeture du moule (10) ;
injection d'un élastomère liquide dans le moule (10) pour former le produit élastomérique mou lié au substrat (15) ; et
ouverture du moule (10) tout en fixant le substrat (15) contre une première pièce de moule (11) pour détacher le produit (1) du moule (10) à l'ouverture du moule (10),
**caractérisé en ce que** le processus comporte l'enclenchement de tiges d'éjection (20) montées sur une seconde pièce de moule (12) avec le substrat (15) en étendant lesdites tiges d'éjection (20) à travers des ouvertures (3) dans le produit (1) pour fixer le substrat (15) contre la première pièce de moule (11) durant l'ouverture du moule (10).

2. Processus selon la revendication 1, le processus comportant l'injection de l'élastomère liquide à travers le substrat (15) dans le moule (10).

3. Processus selon la revendication 1 ou la revendication 2 dans lequel le processus comporte l'enclenchement du substrat (15) au moyen d'une tête bulbeuse (22) sur chaque tige d'éjection (20).

4. Processus selon l'une quelconque des revendications précédentes dans lequel le substrat (15) est un matériau textile.

5. Processus selon la revendication 4 dans lequel le substrat (15) est un matériau textile non tissé.

6. Processus selon la revendication 5 dans lequel le substrat (15) est un matériau polyester non tissé.

7. Processus selon l'une quelconque des revendications précédentes, dans lequel le substrat comprend une bande (15) et le processus comporte :
l'avancée de la bande (15) entre les pièces de moule (11, 12) quand lesdites pièces de moule (11, 12) sont en position ouverte,
l'arrêt de la bande (15),
la fermeture des pièces de moule (11, 12) avec la bande (15) située entre les pièces de moule (11, 12) et passant par une cavité de moulage à l'intérieur du moule (10),
la formation du produit (1) dans la cavité de moule lié à la bande (15),
l'ouverture du moule (10), et
l'avancée de la bande (15) pour décharger le produit (1) du moule (10) sur la bande (15).

8. Processus selon l'une quelconque des revendications précédentes dans lequel le substrat est perforé.

9. Processus selon l'une quelconque des revendications précédentes dans lequel l'élastomère à une dureté dans la plage de 30 Shore A à 20 Shore 00.

10. Processus selon l'une quelconque des revendications précédentes dans lequel l'élastomère est sélectionné dans le groupe : SEBS (styrène-éthylène-butylène-styrène), SEEPS (styrène-éthylène-éthylène-propylène-styrène), SEPS (styrène-éthylène-propylène-styrène), TPU (uréthanes thermoplastiques) et PVC plastifié.

11. Processus selon l'une quelconque des revendications précédentes dans lequel le produit est un coussin.
